# EUROPEAN PATENT SPECIFICATION

(11) **EP 3 853 094 B1**
(45) Date of publication and mention of the grant of the patent: **08.04.2026**
(21) Application number: 19736708.9
(22) Date of filing: 05.07.2019
(51) Int. Cl.: B60K 28/06, B60W 50/10, B60W 40/08, B60W 50/00, B60W 60/00

(54) **A CONTROL SYSTEM FOR A VEHICLE**
REGELUNGSSYSTEM FÜR EIN FAHRZEUG
SYSTÈME DE COMMANDE DE VÉHICULE

(30) Priority: 19.09.2018 GB 201815233
(43) Date of publication of application: 28.07.2021
(73) Proprietor: Jaguar Land Rover Limited, Coventry, Warwickshire CV3 4LF (GB)
(72) Inventor: DE LA TASTE, Simon, Coventry Warwickshire CV3 4LF (GB)
(74) Representative: Jaguar Land Rover Patents Department
(86) International application number: PCT/EP2019/068114
(87) International publication number: WO 2020/057790

(56) References cited:
- DE-A1- 102015 118 195
- DE-A1- 102017 203 678
- US-A1- 2015 066 284
- US-B1- 8 874 301

## Description

### TECHNICAL FIELD

The present disclosure relates to a control system for a vehicle and particularly, but not exclusively, to a control system configured to output a control signal to cause operation of the vehicle in dependence on a determination of whether the occupant is able to take control of the vehicle and a determination of an availability of a communication channel.

### BACKGROUND

During autonomous operation of a vehicle, an occupant of the vehicle may need to remain responsive in order to take control of the vehicle in certain situations. As such, it may be desirable to monitor the responsiveness of the occupant to ensure that this is possible. In situations where the occupant may not need to be responsive, it may still be desirable to monitor the state of the occupant in order to determine if assistance is required. Known systems are configured to stop the vehicle and issue a call or signal for help, for example when a medical condition of an occupant is detected or inferred. However, this may not be possible in areas with little or no communication network coverage.

The present invention has been devised to mitigate or overcome at least some of the above-mentioned problems.

US 20166/066284 A1 describes autonomously driving a vehicle to a safe place in the event a server cannot be reached.

DE102015118195A1 describes sending a call connection request via a satellite communication network when a call connection is not established via the ground communication network.

### SUMMARY OF THE INVENTION

Aspects and embodiments of the invention relate to a control system, a system, a vehicle, a method, computer software and a non-transitory computer readable medium as claimed in the appended claims.

According to an aspect of the present invention, there is provided a control system for a vehicle. The control system comprises one or more controllers and is configured to receive an occupant status signal indicative of an ability of an occupant of the vehicle to take control of the vehicle, receive a communication signal indicative of a status of a communication channel, determine whether the occupant is able to take control of the vehicle in dependence on the received occupant status signal and determine the availability of the communication channel in dependence on the received communication signal, and output a control signal to cause operation of the vehicle to be controlled in dependence on the determination of whether the occupant is able to take control of the vehicle and the determination of the availability of the communication channel, wherein if the control system determines that the occupant is unable to take control of the vehicle and that the communication channel is unavailable, the control system is configured to output at least one control signal to cause autonomous operation of the vehicle, continue monitoring the availability of the communication channel during autonomous operation of the vehicle, and, responsive to the control system determining that the communication channel has subsequently become available, output at least one control signal to cause the vehicle to be autonomously driven to a stopping location.

In embodiments of the invention, the control system is configured to determine a control profile in dependence on the ability of the occupant to take control of the vehicle and the availability of the communication channel. The control profile comprises one or more instructions for controlling operation of the vehicle.

The present invention may therefore inhibit a vehicle, in which there is an occupant who is unable to take control of the vehicle, e.g. having a reduced level of responsiveness, from stopping in a location from which it is not possible to contact a third party. Stopping somewhere from which the vehicle cannot contact a third party may be especially problematic where the third party required to be contacted is an emergency service, for example.

In embodiments of the invention, the occupant status signal may indicate one of either able or not able to take control of the vehicle. In embodiments, the occupant status signal may indicate one or more medical conditions of the occupant. For example, one or more medical conditions that renders the occupant unable to take control of the vehicle.

The status of the communication channel may comprise an availability of the communication channel for communication with a third party.

The one or more controllers may collectively comprise at least one electronic processor having one or more electrical inputs for receiving the occupant status signal and the communication signal and at least one electronic memory device coupled to the at least one electronic processor and having instructions stored thereon, wherein the at least one electronic processor is configured to access the at least one memory device and execute the instructions stored thereon so as to determine whether the occupant is able to take control of the vehicle in dependence on the received occupant status signal, determine the availability of the communication channel in dependence on the received communication signal, and output at least one control signal to cause operation of the vehicle to be controlled in dependence on the determination of whether the occupant is able to take control of the vehicle and the determination of the availability of the communication channel.

The control system may be configured to determine a signal strength of the communication signal and determine whether the signal strength is above or below a threshold sufficient to communicate with a third party via the communication channel. In this way an extent to which the communication channel is available may be determined.

The communication channel may be a telecommunication network channel for contacting a service provider. The service provider may be an emergency service, for example. In embodiments, the channel could be a link to a remote server connected to an emergency service network.

The control signal may be configured to communicate directly with one or more vehicle controllers or may be configured to communicate indirectly with the one or more vehicle controllers/actuators, for example via a central Vehicle Control Unit (VCU) or the like. The control system may be configured to operate during an autonomous mode of operation of the vehicle. According to the invention, if the control system determines that the occupant is unable to take control of the vehicle and that the communication channel is unavailable, the control system may be configured to output at least one control signal to cause autonomous operation of the vehicle.

The control system is configured to output a signal indicating that the vehicle should be driven in an autonomous driving mode and optionally that a third party should be contacted via the communication channel.

The control system may be configured such that, when the output indicates that the occupant in unable to take control of the vehicle, the determined control process comprises driving the vehicle autonomously along a predetermined route, wherein the predetermined route is dependent on the status of the communication channel.

In embodiments, if the control system determines that the occupant is unable to take control of the vehicle and that the communication channel is unavailable, the control system is configured to output at least one control signal to cause at least one from a group comprising: autonomous driving of the vehicle along a predetermined route; continued autonomous driving of the vehicle along a previously defined route; and a location to be determined and autonomous driving of the vehicle towards the determined location.

The control system is configured to continue monitoring the availability of the communication channel during autonomous operation of the vehicle; and if it is determined that the communication channel subsequently becomes available, output at least one control signal to cause the vehicle to be autonomously driven to a stopping location. The determined stopping location may be a nearest appropriate space for the vehicle to stop, for example. If it is determined that the communication channel subsequently becomes available, the control process may also comprise contacting a third party via the communication channel. The third party may be contacted from the stopping location or while travelling towards it.

Additionally, if it is determined that the occupant is unable to take control of the vehicle and the status of the communication channel is an unavailable status such that a third party cannot be contacted, the predetermined route may be a continuation of a previous route and/or a navigation towards a determined location. The determined location may be towards a communications mast, a nearest town or city or an adjoining road. The predetermined route may be terminated once the control module determines an available status of the communication channel.

In embodiments the control system may be configured to obtain data relating to one or more physiological functions of the occupant and to determine from said physiological data if the one or more physiological functions are indicative of the occupant suffering from a medical condition. If it is determined that the one or more physiological functions are indicative of the occupant suffering from a medical condition, the control system may be configured to cause emergency services to be contacted via the communication channel.

If it is determined that the one or more physiological functions are not indicative of the occupant suffering from a medical condition, the control system may be configured to determine from said physiological data if the one or more physiological functions are indicative of the occupant experiencing a high level of drowsiness or are indicative of the occupant sleeping, and the control system may be configured to cause a predetermined third party to be contacted via the communication channel in dependence thereon.

In embodiments the control system is configured to determine if successful contact has been made with a selected third party and, if it is not determined that successful contact has been made, the control system may be configured to cause at least one from a group comprising: make a second or subsequent attempt to contact the selected third party; and contact an alternative third party in accordance with a predetermined third party selection sequence.

Upon successful contact being made with a third party, the control system may be configured to provide information to the third party comprising at least one from a group comprising: current vehicle location; determined stopping location; and physiological data concerning the occupant.

In embodiments, the control system is configured such that, if it is determined that the occupant in unable to take control of the vehicle, the control process comprises driving the vehicle in accordance with a determined speed profile. The speed profile may be determined in dependence on at least one from a group comprising: the route being travelled; and one or more physiological functions of the occupant.

In embodiments the speed profile may comprise a maximum set speed which is lower than the speed at which the vehicle is travelling when it is first determined that the occupant is unable to take control of the vehicle. The control system may be configured to reduce the vehicle speed to a set speed according to a predetermined deceleration profile. The speed profile may be determined by an advanced driver assistance system (ADAS) which comprises a plurality of speed profiles stored within a memory thereof.

The control system may be configured such that, if it is determined that the occupant in unable to take control of the vehicle, the control process comprises providing an alert to other road users. The alert may comprise a visual or audio signal of an anomalous driving condition, for example by operating the hazard lights and/or operating a siren of the vehicle.

In embodiments the communication signal may comprise an indication of at least one from a group comprising: a signal strength for the communication channel; a signal-to-noise ratio for the communication channel; a quality of a received signal for the communication channel; and a signal power for the communication channel. The communication channel may comprise a wireless telecommunication network channel.

In embodiments the occupant status signal may comprise an indication of at least one from a group comprising: a medical condition of the occupant; a heart rate of the occupant; a respiratory rate of the occupant; a blood sugar level of the occupant; brain activity of the occupant; a head position of the occupant; facial movements of the occupant; and eye movements of the occupant.

Also disclosed herein is a system for a vehicle comprising a control system as set forth in any of the embodiments described above, an occupant condition monitor configured to deliver the occupant status signal to the control system and a telematics control unit (TCU) configured to deliver the communication signal to the control system.

The occupant condition monitor may be configured to detect indicators of one or more medical conditions. For example, such indicators may include heart rate, blood pressure, respiration, body temperature etc. The one or more medical conditions could include conditions that render an occupant unable to take control of the vehicle.

Also disclosed herein is a vehicle comprising a control system as set forth in any of the embodiments described above.

According to a further aspect of the present invention, there is provided a method for controlling operation of a vehicle. The method comprises receiving an occupant status signal indicative of an ability of an occupant of the vehicle to take control of the vehicle and receiving a communication signal indicative of a status of a communication channel, determining whether the occupant is able to take control of the vehicle in dependence on the received occupant status signal, determining the status of the communication channel in dependence on the received communication signal and generating an output indicative of whether the occupant is able to take control of the vehicle and the status of the communication channel.

In embodiments of the invention, the method may comprise determining a control profile in dependence on the ability of the occupant to take control of the vehicle and the availability of the communication channel. The control profile may comprise one or more instructions for controlling operation of the vehicle.

In embodiments of the invention, the occupant status signal may indicate one of either able or not able to take control of the vehicle. In embodiments, the occupant status signal may indicate one or more medical conditions of the occupant. For example, one or more medical conditions that renders the occupant unable to take control of the vehicle.

The status of the communication channel may comprise an availability of the communication channel for communication with a third party.

The method may comprise determining a signal strength of the communication signal and determining whether the signal strength is above or below a threshold sufficient to communicate with a third party via the communication channel.

The communication channel may be a telecommunication network channel for contacting a service provider. The service provider may be an emergency service, for example. In embodiments, the channel could be a link to a remote server connected to an emergency service network.

In embodiments, if it is determined that the occupant is unable to take control of the vehicle and that the communication channel is unavailable, the method may comprise outputting at least one control signal to cause autonomous operation of the vehicle.

According to the invention, the method comprises outputting a signal indicating that the vehicle should be driven in an autonomous driving mode and optionally that a third party should be contacted via the communication channel.

According to the invention, when the output indicates that the occupant in unable to take control of the vehicle, the method may comprise driving the vehicle autonomously along a predetermined route, wherein the predetermined route is dependent on the status of the communication channel.

In embodiments, if it is determined that the occupant is unable to take control of the vehicle and that the communication channel is unavailable, the method may comprise outputting at least one control signal to cause at least one from a group comprising: autonomous driving of the vehicle along a predetermined route; continued autonomous driving of the vehicle along a previously defined route; and a location to be determined and autonomous driving of the vehicle towards the determined location.

The method may comprise continually monitoring the availability of the communication channel during autonomous operation of the vehicle; and if it is determined that the communication channel subsequently becomes available, outputting at least one control signal to cause the vehicle to be autonomously driven to a stopping location. The determined stopping location may be a nearest appropriate space for the vehicle to stop, for example. If it is determined that the communication channel subsequently becomes available, the method may also comprise contacting a third party via the communication channel. The third party may be contacted from the stopping location or while travelling towards it.

Additionally, if it is determined that the occupant is unable to take control of the vehicle and the status of the communication channel is an unavailable status such that a third party cannot be contacted, the predetermined route may be a continuation of a previous route and/or a navigation towards a determined location. The determined location may be towards a communications mast, a nearest town or city or an adjoining road. The predetermined route may be terminated once the control module determines an available status of the communication channel.

In embodiments the method may comprise obtaining data relating to one or more physiological functions of the occupant and determining from said physiological data if the one or more physiological functions are indicative of the occupant suffering from a medical condition. If it is determined that the one or more physiological functions are indicative of the occupant suffering from a medical condition, the method may comprise causing emergency services to be contacted via the communication channel.

If it is determined that the one or more physiological functions are not indicative of the occupant suffering from a medical condition, the method may comprise determining from said physiological data if the one or more physiological functions are indicative of the occupant experiencing a high level of drowsiness or are indicative of the occupant sleeping, and the method comprises causing a predetermined third party to be contacted via the communication channel in dependence thereon.

In embodiments the method comprises determining if successful contact has been made with a selected third party and, if it is not determined that successful contact has been made, the method may comprise causing at least one from a group comprising: make a second or subsequent attempt to contact the selected third party; and contact an alternative third party in accordance with a predetermined third party selection sequence.

Upon successful contact being made with a third party, the method may comprise providing information to the third party comprising at least one from a group comprising: current vehicle location; determined stopping location; and physiological data concerning the occupant.

In embodiments, if it is determined that the occupant in unable to take control of the vehicle, the method comprises causing the vehicle to be driven in accordance with a determined speed profile. The speed profile may be determined in dependence on at least one from a group comprising: the route being travelled; and one or more physiological functions of the occupant.

In embodiments the speed profile may comprise a maximum set speed which is lower than the speed at which the vehicle is travelling when it is first determined that the occupant is unable to take control of the vehicle. The method may comprise causing a reduction in the vehicle speed to a set speed according to a predetermined deceleration profile.

In some embodiments, if it is determined that the occupant in unable to take control of the vehicle, the method may comprise providing an alert to other road users. The alert may comprise a visual or audio signal of an anomalous driving condition, for example by operating the hazard lights and/or operating a siren of the vehicle.

In embodiments the communication signal may comprise an indication of at least one from a group comprising: a signal strength for the communication channel; a signal-to-noise ratio for the communication channel; a quality of a received signal for the communication channel; and a signal power for the communication channel. The communication channel may comprise a wireless telecommunication network channel. In embodiments the occupant status signal may comprise an indication of at least one from a group comprising: a medical condition of the occupant; a heart rate of the occupant; a respiratory rate of the occupant; a blood sugar level of the occupant; brain activity of the occupant; a head position of the occupant; facial movements of the occupant; and eye movements of the occupant.

Also provided is computer software that is arranged to perform a method as set forth in any of the embodiments described above.

In another aspect, a non-transitory, computer-readable medium is provided. The non-transitory, computer-readable medium having instructions stored thereon that, when executed by one or more electronic processors causes the one or more electronic processors to carry out a method of as set forth in and of the embodiment described above.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, provided that such subject-matter falls within the scope of the invention as claimed.

### BRIEF DESCRIPTION OF THE DRAWINGS

One or more embodiments of the invention will now be described, by way of example only, with reference to the accompanying drawings, in which:
Figure 1 is a flow diagram representing a method of controlling a vehicle in accordance with an embodiment of the invention;
Figure 2 is a flow diagram representing a method of selecting and contacting a third party in accordance with an embodiment of the invention;
Figure 3 is a schematic representation of an example of a control system suitable for performing the methods shown in Figures 1 and 2; and
Figure 4 shows a vehicle incorporating the control system of Figure 3.

### DETAILED DESCRIPTION

The present invention relates to control systems and methods to facilitate contacting a third party from a vehicle when the vehicle has stopped due to an occupant being unresponsive. In general terms, embodiments of the invention are directed to the monitoring of the availability of a communication channel as well as the status of the occupant so that appropriate steps may be taken in dependence on both factors.

For example, in some embodiments, where the occupant is identified as unresponsive but there is no communication channel available to contact a third party for help, the vehicle is driven autonomously until a communication channel becomes available at which point the vehicle may be stopped and a third party contacted. Alternatively or additionally, a third party may be contacted once the communication channel has become available and the vehicle is in motion and on route to a determined stopping location.

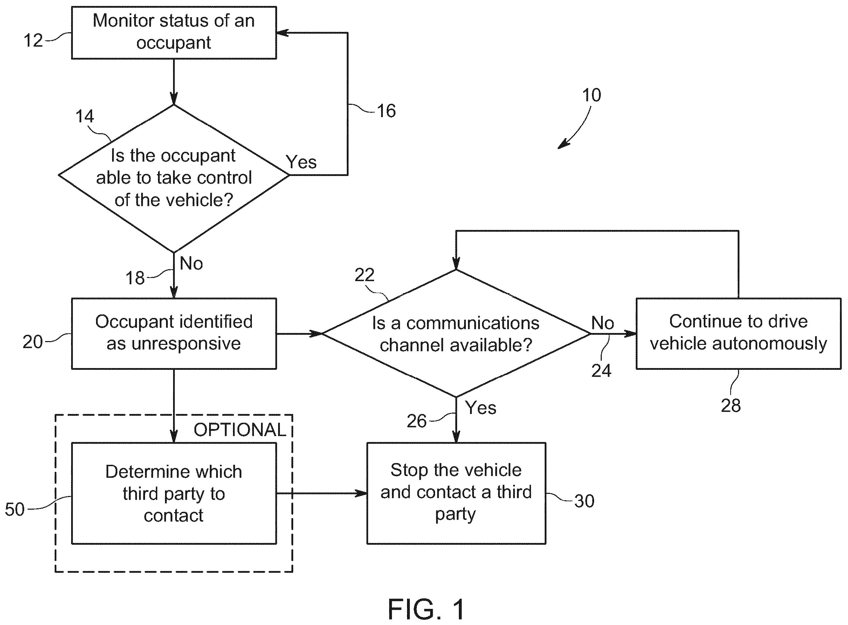

Figure 1 shows a method 10 of controlling a vehicle in accordance with an embodiment of the invention.

At step 12, an occupant of a vehicle is being monitored. The occupant may be a driver of the vehicle or, in the case of an autonomous vehicle, may be a passenger in the vehicle. The vehicle is a moving vehicle and it may be being driven by the occupant or may be operating partly or fully autonomously.

The occupant is monitored to detect a status thereof, the status of the occupant being one of either an ability to take control of the vehicle or an inability to take control of the vehicle. One or more physiological functions of the occupant may be measured and monitored in order to determine the status. For example, the occupant's heart rate and/or the respiratory rate may be monitored. Additionally or alternatively the physiological function monitored may be head position, eye movement, facial movement, heart rate, brain activity or any other function of the occupant that may indicate an ability of the occupant to take control of the vehicle.

The physiological functions may be used to determine a condition of the occupant indicative of the status. For example, the physiological functions may be indicative of a medical condition of an occupant or may indicate a level of drowsiness or sleep.

At the next step 14, it is determined whether or not the occupant is able to take control of the vehicle based on the detected status thereof. For example, if the physiological functions are determined to be within a predetermined range of acceptability, then the occupant may be considered responsive and therefore able to take control of the vehicle.

Alternatively, if the physiological functions monitored are indicative of a medical condition, particularly a medical condition that may incapacitate the occupant, or if the physiological functions are considered indicative of high levels of drowsiness or sleep, then the occupant may be considered unresponsive and therefore unable to take control of the vehicle.

If it is determined that the occupant is able to take control of the vehicle, the method follows path 16. No changes to vehicle controls are required and the status of the occupant is continued to be monitored.

If it is determined that the occupant is not able to take control of the vehicle, or their ability to take control of the vehicle is impaired in some way, the occupant is identified as unresponsive at step 20, and the method proceeds to step 22 in which it is determined whether or not a communication channel is available. In the context of the invention, the availability of a communication channel may refer to the ability to establish a communication link via the channel. For example, an available channel may be defined as one via which the vehicle is able to establish a communication link, for example by making a call, and an unavailable channel may be defined as one via which an effective link cannot be made.

The step 22 of determining whether a communication channel is available may comprise receiving a communication signal indicative of a status of the communication channel, the status being one of available and unavailable as described above. For example, a signal strength of the communication signal may be monitored and it may be determined whether the monitored signal strength is above or below a threshold strength. The threshold signal strength may be defined as a signal strength sufficient to establish a communication link to communicate with the third party, for example.

In embodiments, the signal strength may correspond to one of strong, weak or non-existent. In such embodiments, a strong signal strength indicates that a communication link can or is likely to be able to be established and/or a call over that communication link can or is likely to be able to be completed. Conversely, a weak signal strength or non-existent signal strength may indicate that a communication link cannot or is unlikely to be able to be established and/or a call over that communication link cannot or is unlikely to be completed.

Furthermore, in determining whether a communication channel is available, any one or more signal quality metrics may also be used. For example, a Received Signal Code Power (RSCP), a Received Signal Strength Indicator (RSSI), a Signal-to-noise Ratio (SNR), Received Signal Received Quality (RSRQ), or Received Signal Received Power (RSRP) metric may be used to determine the availability of a communication channel.

The communication channel may be a wireless communication channel such as a telecommunication network channel for contacting a third party. The third party may be a service provider. For example, the service provider may be an emergency service such as an ambulance. Additionally or alternatively the third party may be a designated contact person such as a relative or friend who has been preselected by the occupant. The third party may also be a call centre or response team. In embodiments the channel could provide a communication link to a remote server connected to an emergency service network or could provide a communication link with another vehicle that is able to make a call or the like on behalf of the vehicle. For example, the communication channel may comprise a telecommunication channel such as a 3G or 4G, LTE or the like connection, a WiFi (RTM) or Bluetooth (RTM) connection or other short range, e.g. Internet of Things (IOT) communication channel. The call may be made by a communication system integral with the vehicle, such as an on board telematics control unit (TCU), or may be made by a mobile device coupled with the vehicle, via the TCU for example.

A communication channel's availability may be affected by any number of reasons. For example, the vehicle may be a considerable distance from a telecommunications mast, or may be travelling through unfavourable terrain such as large hills or mountains causing an obstruction to the signal. Additionally or alternatively, the vehicle may be travelling through a tunnel, or alongside large buildings having considerable metallic construction and/or trees that may block the signal. Other factors that may also affect a communication signal may include co-channel interference, pilot pollution from adjacent masts and adverse weather conditions.

The method 10 thus provides an indication of the status of the occupant and the availability of a communication channel, for example to make a call, such as an audio call, or any other type of data connection as required. As such, a control process for the vehicle may be determined in dependence on both of these factors.

For example, if it is determined that a communication channel is not available then the method proceeds along path 24 to step 28 wherein the vehicle continues to be driven autonomously. The vehicle may be driven autonomously along a predetermined route, continue along a previous route or towards a determined location. For example, the vehicle may be driven towards a communications mast, a nearest town or city or an adjoining road. The route may be determined by a preprogramed module of the vehicle such as an advanced driver-assistance system (ADAS) module in dependence of a variety of factors, for example relating to map data or predetermined algorithms.

The availability of a communication channel may be continued to be monitored during autonomous driving until it is determined that a communication channel is available. Once it is determined that a communication channel is available the method proceeds along path 26 to step 30 in which the vehicle is stopped or driven to the nearest appropriate stopping location and a third party is contacted via the available communication channel. The nearest appropriate stopping location may also be determined by the ADAS module using techniques known in the art. For example, the nearest stopping location may be determined through reference to a map database or the like to identify one or more locations within the vicinity of the vehicle where the vehicle may stop. The one or more locations may be designated areas such as lay-bys, car parks or on street parking locations, for example.

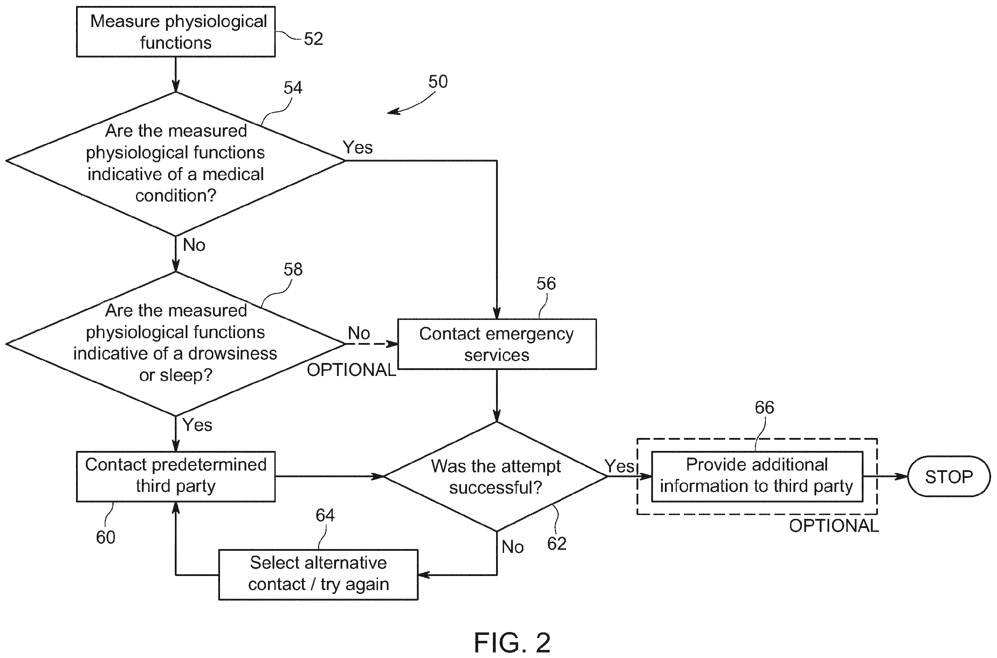

In embodiments, the method 10 may optionally comprise step 50 in which an appropriate third party to be contacted may be determined in dependence on measured physiological functions. Figure 2 shows an example method 50 for selecting a third party in dependence on the physiological condition of a vehicle occupant in accordance with an embodiment of the invention.

In a first step 52 data indicative of one or more physiological functions of a vehicle occupant is measured and/or monitored and/or obtained in any suitable manner. The data may include the heart rate of the occupant, the respiratory rate of the occupant, the blood pressure of the occupant and/or the blood sugar levels of the occupant for example, or any combination thereof or any other physiological measurement and/or observation as may be required. Systems for monitoring the physiological function(s) of vehicle occupants are known in the art and therefore will not be discussed in detail.

At step 54 the data obtained in step 52 is used to determine if the measured one or more physiological functions are indicative of the vehicle occupant suffering from a medical condition. If it is determined at step 54 that the one or more physiological functions are indicative of the occupant suffering from a medical condition, emergency services are contacted at step 56.

If it is determined that the one or more physiological functions are not indicative of the occupant suffering from a medical condition, the method progresses to step 58 where it is determined if the one or more physiological functions are indicative of the vehicle occupant experiencing a high level of drowsiness or are indicative of the occupant sleeping. If it is determined that the one or more physiological functions are indicative of the vehicle occupant being drowsy or sleeping, the method proceeds to step 60 where a suitable contact is selected from a predetermined list of contacts according to a predetermined selection criteria. The predetermined list of contacts may have been previously provided by the vehicle occupant. Alternatively or additionally, the predetermined list of contacts may include a call centre. The call centre may attempt to communicate with the occupant in order to determine the appropriate course of action. The call centre may be able to access information relating to the status of the occupant to decide whether to contact an ambulance and/or family member. Where the vehicle is part of a fleet of vehicles, such as a fleet lorry or other commercial vehicle, a fleet control centre may be contacted.

If it is determined at step 58 that the one or more physiological functions are not indicative of the occupant being drowsy, or sleeping, the control system might optionally be programmed to contact the emergency services. Alternatively, a suitable third party may be contacted regardless of whether it is determined that the one or more physiological functions are indicative of the occupant being drowsy or sleeping.

At step 62 it is determined if the contact attempt has been successful. If not, the method proceeds to step 64 where an alternative contact is selected in accordance with the predetermined selection criteria. Alternatively, if the initial contact attempt was made to the emergency services, a second or subsequent contact attempt may be made until successful contact is made. One a suitable third party has been selected at step 64 the method returns to step 60 where a new/second/subsequent contact attempt is made.

Optionally, in embodiments the method 50 may include step 66 at which information concerning the occupant's physiological condition and/or location may be provided to the third party.

As indicated in Figure 1, method 50 may occur concurrently with method steps 22 to 28 of method 10. At step 30 of method 10, a third party may be contacted before or after the vehicle has come to a stop. If contact is made before the vehicle has come to a stop, at step 66 of method 50, for example, the determined stopping location may be provided to the third party. Alternatively or additionally, a tracking signal, such as a GPS signal or the like, may be transmitted to the third party to provide real time information concerning the location of the vehicle.

Although not shown, it is envisaged that an emergency button or switch or the like may be provided in a passenger cabin of the vehicle, which, when activated by a vehicle occupant, causes method 50 to be initiated..

In embodiments, when the occupant has been identified as unable to take control of the vehicle, the vehicle may be driven in accordance with a determined speed profile. The speed profile may be determined by the ADAS module, for example, and comprise a maximum set speed of the vehicle in dependence on the route being travelled. As such, the maximum set speed may be lower than the current speed at which the vehicle is travelling. In this case the vehicle speed may be reduced to a set speed according to a predetermined deceleration. In embodiments, a plurality of speed profiles may be stored within memory of the ADAS module.

In some embodiments, the vehicle may also provide an alert to other road users when the vehicle is being driven autonomously with an occupant deemed unable to take control of the vehicle. For example, the alert may comprise a visual or audio signal indicative of an anomalous driving condition, such as operation of the vehicle hazard lights or other flashing lights, a siren, the vehicle horn or displaying a hazard sign visible to other road users.

The method according to embodiments of the invention may therefore inhibit a vehicle, in which an occupant is deemed unable to take control of the vehicle, from stopping in a location from which it is not possible to contact a third party.

By monitoring the availability of the communication signal in real time, either continuously or just when the occupant is identified as unable to take control of the vehicle, the vehicle systems are able to determine the availability of a communication channel without the need to store historic network reception maps which may comprise large amounts of data and may also be subject to variability depending on external conditions such as the weather.

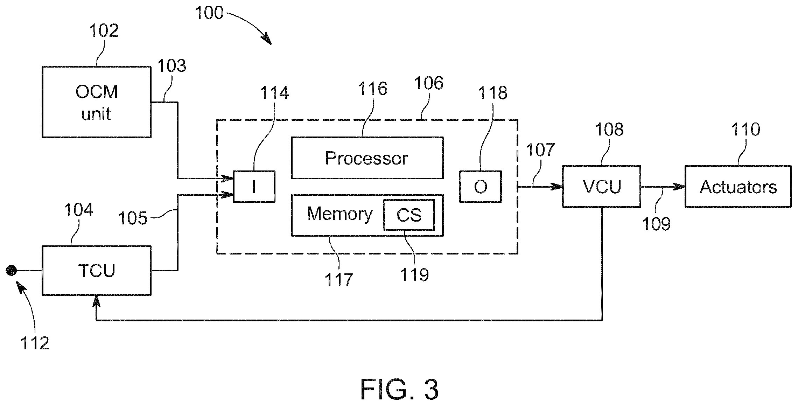

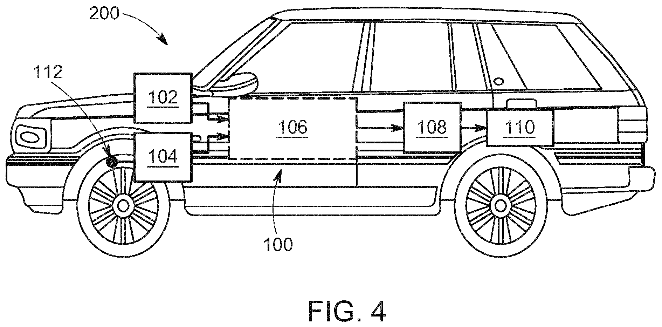

Figure 3 is a schematic representation of an embodiment of a vehicle system 100 for performing the method 10 as described above. The system 100 is configured for use with a vehicle (shown in Figure 4) operable in an autonomous mode of operation.

The vehicle system 100 comprises means for monitoring the condition of an occupant, which in the illustrated embodiments is in the form of an occupant condition monitoring (OCM) unit 102, means for monitoring the availability of a communication channel, which in the illustrated embodiments is in the form of a telematics control unit (TCU) 104, a control system comprising a control module 106, a vehicle control unit (VCU) 108 and actuators 110 for autonomously driving the vehicle.

The OCM unit 102 comprises features configured to determine whether an occupant of the vehicle is able to take control of the vehicle. For example, the OCM unit 102 may comprise one or more sensors (not shown) adapted to monitor one or more physiological functions of the occupant, as described above. The physiological function may include the heart rate of the occupant and/or the respiratory rate of the occupant, for example. As discussed above, such OCM units 102 are known in the art and therefore will not be discussed in detail. The OCM unit 102 then generates an occupant status signal 103 indicative of an ability of an occupant of the vehicle to take control of the vehicle.

The TCU 104 comprises means for contacting a third party via a communication channel. The TCU 104 further comprises means capable of detecting the status of the communication channel and generating a communication signal 105 indicative of the status of the communication channel. For example, the TCU 104 may comprise a transmitter/receiver 112 capable of detecting the status of the communication channel and contacting a third party. The communication signal 105 transmitted by the TCU 104 may comprise information relating to an availability of the communication channel for communication with a third party. Such information may include an indication of a signal strength of the communication channel. As described above, any one or more signal quality metrics may also be used. For example, a Received Signal Code Power (RSCP), a Received Signal Strength Indicator (RSSI), a Signal-to-noise Ratio (SNR), Received Signal Received Quality (RSRQ), or Received Signal Received Power (RSRP) metric may be used to determine the availability of a communication channel. The signal strength may correspond to one of strong, weak or non-existent; wherein strong signal strength indicates it is likely that a link to the communication channel may be established and/or a call over the communication channel may be completed and weak signal strength or non-existent signal strength indicates that it is unlikely that a link to the communication channel may be established and/or a call over the communication channel may be completed.

In some embodiments, the system 100 may comprise a wireless communication device such as a mobile phone or tablet comprising WiFi, (RTM) Bluetooth (RTM) and/or IOT capabilities, instead of or in addition to the TCU 104. The wireless communication device may be in communication with the control module 106 e.g. via a wireless connection. In embodiments, the device may replace the TCU 104 or may operate with the TCU 104 to achieve the above mentioned functionality. For example, the device may communicate with the TCU 104 via a wireless connection.

In any of the embodiments above, the communication channel may be a telecommunication network channel for contacting a service provider such as an emergency service or may be a channel for connecting with another vehicle or network capable of contacting the service provider on behalf of the vehicle. Additionally or alternatively the communication channel may be a WiFi, (RTM) Bluetooth (RTM) or IOT link configured for vehicle-to-vehicle (V2V) and/or vehicle to infrastructure (V2I) communication.

The control module 106 comprises an input 114 connected with the OCM unit 102 and TCU 104 and configured to receive the occupant status signal 103 from the OCM unit 102 and the communication signal 105 from the TCU 104. The control module 106 further comprises a processor 116 configured to determine whether the occupant is able to take control of the vehicle in dependence on the occupant status signal 103 received from the OCM unit 102. The processor 116 is further configured to determine the availability of the communication channel in dependence on the communication signal 105 from the TCU 104. The processor 116 may access data and/or instructions stored in a computer readable medium such as memory 117 of the control module 106. In embodiments, computer software 119 may be stored in memory 117, which computer software 119 is executable, for example, to perform the methods as described above in relation to Figure 1 and Figure 2 above.

In the illustrated embodiment, the control module 106 further comprises an output 118 configured to output a signal 107 indicative of whether the occupant is able to take control of the vehicle and the status of the communication channel.

In embodiments, the processor 116 may be configured to determine a signal strength of the communication channel and determine whether the signal strength is above or below a threshold sufficient to communicate with the third party. In alternative embodiments, the signal strength may be determined by the TCU 104 and communicated with the control module 106 via communication signal 105. Although the illustrated embodiment shows the control module 106 comprising a single processor 116, it will be appreciated that one or more processors may be used to perform the functions described in relation to the control module 106 above.

The output 118 of the control module 106 is connected with the VCU 108 which may comprise an ADAS module as referenced above and is configured to receive the signal 107 indicative of whether occupant is able to take control of the vehicle and the availability of the communication channel. The VCU 108 may be configured to determine a control process in dependence on the signal received from the control module 106. The control process may comprise instructions and/or control signals 109 deliverable to the vehicle actuators 110 and/or TCU 104 in order to autonomously drive the vehicle via the actuators 110 and/or contact a third party via the communication channel. The control process may comprise instructions to perform the method 10 as described above. The VCU 108 may be in communication with the TCU 104 and actuators 110 via a CAN bus or the like.

The actuators 110 are configured to receive control signal 109 from the VCU 108 to operate various vehicle systems in accordance with the determined control process. The VCU 108 and actuators 110 may be collectively provide autonomous driving functionality and also be referred to as vehicle controllers.

Although the illustrated embodiment shows the control module 106 and VCU 108 as separate components, it will be appreciated that the control module 106 or components thereof may form part of the VCU 108 and may or may not be integral therewith.

In embodiments, the control module 106 may comprise hardware that is compatible with existing models of VCU, OCM units and TCUs such that the control module 106 may be retro-fit into existing vehicle systems without substantial modification thereto.

Figure 4 shows schematically a vehicle 200 incorporating the control system 100 of Figure 3. The control system 100 is substantially as described above and interacts with various vehicle systems (not shown) to perform the methods as described also in relation to Figure 1 and Figure 2 above.

Processors such as those discussed above, generally each include instructions executable by one or more processors for carrying out the method steps described above. For example, the method steps discussed above may be embodied as computer-executable instructions.

Computer-executable instructions may be compiled or interpreted from computer programs created using a variety of programming languages and/or technologies. In general, a processor such as a microprocessor, receives instructions, for example from a memory or any other suitable computer-readable medium, and executes these instructions to perform one or more processes or methods, including one or more of the methods described above. Such instructions and other data may be stored and transmitted using a variety of computer-readable media. A computer-readable medium includes any medium that participates in providing data (e.g., instructions), which may be read by a processor.

In the illustrated embodiments the system and methods relate to determining a safe course of action when driving in an autonomous mode. However, it will be appreciated that the invention can also be applied if the vehicle is being driven in a manual mode and the driver becomes incapacitated such that they are unable to resume control of the vehicle. In this situation, the previously inactive autonomous system could take over and decide a safe stopping location.

Many modifications may be made to the above examples without departing from the scope of the present invention as defined in the accompanying claims.

## Claims

1. A control system for a vehicle, the control system comprising one or more controllers (106, 108), the control system configured to:
receive an occupant status signal (103) indicative of an ability of an occupant of the vehicle to take control of the vehicle;
receive a communication signal (105) indicative of a status of a communication channel;
determine whether the occupant is able to take control of the vehicle in dependence on the received occupant status signal (103);
determine the availability of the communication channel in dependence on the received communication signal (105); and
output a control signal (107, 109) to cause operation of the vehicle to be controlled in dependence on the determination of whether the occupant is able to take control of the vehicle and the determination of the availability of the communication channel,
wherein if the control system determines that the occupant is unable to take control of the vehicle and that the communication channel is unavailable, the control system is configured to output at least one control signal to cause autonomous operation of the vehicle, **characterized in that** the system is also configured to continue monitoring the availability of the communication channel during autonomous operation of the vehicle, and, responsive to the control system determining that the communication channel has subsequently become available, output at least one control signal to cause the vehicle to be autonomously driven to a stopping location.

2. The control system of claim 1, wherein the control system is configured to determine a control profile in dependence on the ability of the occupant to take control of the vehicle and the availability of the communication channel, the control profile comprising one or more instructions for controlling operation of the vehicle.

3. The control system of claim 1 or 2, wherein if the control system determines that the occupant is unable to take control of the vehicle and that the communication channel is unavailable, the control system is configured to output at least one control signal (107, 109) to cause at least one from a group comprising:
autonomous driving of the vehicle along a predetermined route;
continued autonomous driving of the vehicle along a previously defined route; and
a location to be determined and autonomous driving of the vehicle towards the determined location.

4. The control system of claim 1, wherein if it is determined that the communication channel subsequently becomes available, the control system is configured to cause a third party to be contacted via the communication channel.

5. A system for a vehicle, the system comprising:
a control system as set forth in any preceding claim;
an occupant condition monitor (102) configured to deliver the occupant status signal (103) to the control system; and
a telematics control unit (TCU) (104) configured to deliver the communication signal (105) to the control system.

6. A vehicle comprising the control system of any one of claims 1 to 4, or the system of claim 5.

7. A method for controlling operation of a vehicle, the method comprising:
receiving an occupant status signal (103) indicative of an ability of an occupant of the vehicle to take control of the vehicle and receiving a communication signal (105) indicative of a status of a communication channel;
determining whether the occupant is able to take control of the vehicle in dependence on the received occupant status signal;
determining the status of the communication channel in dependence on the received communication signal; and
generating an output (118) indicative of whether the occupant is able to take control of the vehicle and the status of the communication channel, wherein if it is determined that the occupant is unable to take control of the vehicle and that the communication channel is unavailable, the method comprises:
outputting at least one control signal to cause autonomous operation of the vehicle,
continuing monitoring the availability of the communication channel during autonomous operation of the vehicle; and
responsive to determining that the communication channel has subsequently become available, outputting at least one control signal to cause the vehicle to be autonomously driven to a stopping location.

8. Computer software (119) that, when executed, is arranged to perform the method of claim 7.

9. A non-transitory, computer-readable medium (117) having instructions stored thereon that, when executed by one or more electronic processors (116) causes the one or more electronic processors (116) to carry out the method of claim 7.

## Patentansprüche

1. Steuerungssystem für ein Fahrzeug, das Steuerungssystem umfassend eine oder mehrere Steuerungen (106, 108), wobei das Steuerungssystem konfiguriert ist zum:
Empfangen eines Insassenstatussignals (103), das ein Imstandesein eines Insassen des Fahrzeugs anzeigt, die Steuerung des Fahrzeugs zu übernehmen;
Empfangen eines Kommunikationssignals (105), das einen Status eines Kommunikationskanals anzeigt;
Bestimmen, in Abhängigkeit von dem empfangenen Insassenstatussignal (103), ob der Insasse imstande ist, die Steuerung des Fahrzeugs zu übernehmen;
Bestimmen der Verfügbarkeit des Kommunikationskanals in Abhängigkeit von dem empfangenen Kommunikationssignal (105); und
Ausgeben eines Steuersignals (107, 109), um zu bewirken, dass der Betrieb des Fahrzeugs in Abhängigkeit von der Bestimmung, ob der Insasse imstande ist, die Steuerung des Fahrzeugs zu übernehmen, und der Bestimmung der Verfügbarkeit des Kommunikationskanals gesteuert wird,
wobei, wenn das Steuerungssystem bestimmt, dass der Insasse nicht imstande ist, die Steuerung des Fahrzeugs zu übernehmen und dass der Kommunikationskanal nicht verfügbar ist, das Steuerungssystem konfiguriert ist, um mindestens ein Steuersignal auszugeben, um einen autonomen Betrieb des Fahrzeugs zu bewirken, **dadurch gekennzeichnet, dass** das System auch konfiguriert ist, um die Verfügbarkeit des Kommunikationskanals während des autonomen Betriebs des Fahrzeugs weiterhin zu überwachen, und, ansprechend darauf, dass das Steuerungssystem bestimmt, dass der Kommunikationskanal nachfolgend verfügbar geworden ist, mindestens ein Steuersignal auszugeben, um zu bewirken, dass das Fahrzeug autonom zu einem Anhalteplatz gefahren wird.

2. Steuerungssystem nach Anspruch 1, wobei das Steuerungssystem konfiguriert ist, um ein Steuerprofil in Abhängigkeit von dem Imstandesein des Insassen, die Steuerung des Fahrzeugs zu übernehmen, und der Verfügbarkeit des Kommunikationskanals zu bestimmen, wobei das Steuerprofil eine oder mehrere Anweisungen zum Steuern des Betriebs des Fahrzeugs umfasst.

3. Steuerungssystem nach Anspruch 1 oder 2, wobei, falls das Steuerungssystem bestimmt, dass der Insasse nicht imstande ist, die Steuerung des Fahrzeugs zu übernehmen und dass der Kommunikationskanal nicht verfügbar ist, das Steuerungssystem konfiguriert ist, um mindestens ein Steuersignal (107, 109) auszugeben, um mindestens eines aus einer Gruppe zu bewirken, die umfasst:
autonomes Fahren des Fahrzeugs entlang einer vorbestimmten Route;
fortgesetztes autonomes Fahren des Fahrzeugs entlang einer zuvor definierten Route; und
einen zu bestimmenden Ort und autonomes Fahren des Fahrzeugs zu dem bestimmten Ort.

4. Steuerungssystem nach Anspruch 1, wobei, falls bestimmt wird, dass der Kommunikationskanal nachfolgend verfügbar wird, das Steuerungssystem konfiguriert ist, um zu bewirken, dass ein Dritter über den Kommunikationskanal kontaktiert wird.

5. System für ein Fahrzeug, das System umfassend:
ein Steuerungssystem nach einem der vorstehenden Ansprüche;
einen Insassenzustandsmonitor (102), der konfiguriert ist, um das Insassenstatussignal (103) an das Steuerungssystem zu liefern; und
eine Telematik-Steuereinheit (TCU) (104), die konfiguriert ist, um das Kommunikationssignal (105) an das Steuerungssystem zu liefern.

6. Fahrzeug, umfassend das Steuerungssystem nach einem der Ansprüche 1 bis 4 oder das System nach Anspruch 5.

7. Verfahren zum Steuern eines Betriebs eines Fahrzeugs, das Verfahren umfassend:
Empfangen eines Insassenstatussignals (103), das ein Imstandesein eines Insassen des Fahrzeugs anzeigt, die Steuerung des Fahrzeug zu übernehmen, und Empfangen eines Kommunikationssignals (105), das einen Status eines Kommunikationskanals anzeigt;
Bestimmen, in Abhängigkeit von dem empfangenen Insassenstatussignal, ob der Insasse imstande ist, die Steuerung des Fahrzeugs zu übernehmen;
Bestimmen des Status des Kommunikationskanals in Abhängigkeit von dem empfangenen Kommunikationssignal; und
Erzeugen einer Ausgabe (118), die anzeigt, ob der Insasse imstande ist, die Steuerung des Fahrzeug zu übernehmen, und den Status des Kommunikationskanals, wobei, falls bestimmt wird, dass der Insasse nicht imstande ist, die Steuerung des Fahrzeug zu übernehmen, und dass der Kommunikationskanal nicht verfügbar ist, das Verfahren umfasst:
Ausgeben mindestens eines Steuersignals, um einen autonomen Betrieb des Fahrzeugs zu bewirken,
fortlaufendes Überwachen der Verfügbarkeit des Kommunikationskanals während des autonomen Betriebs des Fahrzeugs; und
als Reaktion auf das Bestimmen, dass der Kommunikationskanal nachfolgend verfügbar geworden ist, Ausgeben mindestens eines Steuersignals, um zu bewirken, dass das Fahrzeug autonom zu einem Anhalteplatz gefahren wird.

8. Computersoftware (119), die, wenn sie ausgeführt wird, eingerichtet ist, um das Verfahren nach Anspruch 7 durchzuführen.

9. Nichtflüchtiges, computerlesbares Medium (117), auf dem Anweisungen gespeichert sind, die, wenn sie durch einen oder mehrere elektronische Prozessoren (116) ausgeführt werden, den einen oder die mehreren elektronischen Prozessoren (116) veranlassen, das Verfahren nach Anspruch 7 auszuführen.

## Revendications

1. Système de commande destiné à un véhicule, le système de commande comprenant un ou plusieurs dispositifs de commande (106, 108), le système de commande étant configuré pour :
recevoir un signal d'état d'occupant (103) indiquant une capacité d'un occupant du véhicule à prendre la commande du véhicule ;
recevoir un signal de communication (105) indiquant un état d'un canal de communication ;
déterminer si l'occupant est en mesure de prendre la commande du véhicule en fonction du signal d'état d'occupant reçu (103) ;
déterminer la disponibilité du canal de communication en fonction du signal de communication reçu (105) ; et
émettre un signal de commande (107, 109) pour amener un fonctionnement du véhicule à être commandé en fonction du fait de déterminer si l'occupant est en mesure de prendre la commande du véhicule et de la détermination de la disponibilité du canal de communication,
dans lequel, si le système de commande détermine que l'occupant n'est pas en mesure de prendre la commande du véhicule et que le canal de communication n'est pas disponible, le système de commande est configuré pour émettre au moins un signal de commande afin de provoquer un fonctionnement autonome du véhicule, **caractérisé en ce que** le système est également configuré pour continuer à surveiller la disponibilité du canal de communication pendant un fonctionnement autonome du véhicule, et, en réponse au système de commande déterminant que le canal de communication est devenu disponible par la suite, émettre au moins un signal de commande pour amener le véhicule à être conduit de manière autonome jusqu'à un emplacement d'arrêt.

2. Système de commande selon la revendication 1, dans lequel le système de commande est configuré pour déterminer un profil de commande en fonction de la capacité de l'occupant à prendre la commande du véhicule et de la disponibilité du canal de communication, le profil de commande comprenant une ou plusieurs instructions pour commander un fonctionnement du véhicule.

3. Système de commande selon la revendication 1 ou 2, dans lequel, si le système de commande détermine que l'occupant n'est pas en mesure de prendre la commande du véhicule et que le canal de communication n'est pas disponible, le système de commande est configuré pour émettre au moins un signal de commande (107, 109) pour provoquer au moins l'un parmi un groupe comprenant :
une conduite autonome du véhicule le long d'un itinéraire prédéterminé ;
la poursuite de la conduite autonome du véhicule le long d'un itinéraire préalablement défini ; et
un emplacement à déterminer et une conduite autonome du véhicule vers l'emplacement déterminé.

4. Système de commande selon la revendication 1, dans lequel, s'il est déterminé que le canal de communication devient disponible par la suite, le système de commande est configuré pour amener un tiers à être contacté par l'intermédiaire du canal de communication.

5. Système destiné à un véhicule, le système comprenant :
un système de commande selon l'une quelconque revendication précédente ;
un dispositif de surveillance de situation d'occupant (102) configuré pour émettre le signal d'état d'occupant (103) vers le système de commande ; et
une unité de commande télématique (TCU) (104) configurée pour émettre le signal de communication (105) vers le système de commande.

6. Véhicule comprenant le système de commande selon l'une quelconque des revendications 1 à 4 ou le système selon la revendication 5.

7. Procédé permettant de commander un fonctionnement d'un véhicule, le procédé comprenant :
la réception d'un signal d'état d'occupant (103) indiquant une capacité d'un occupant du véhicule à prendre la commande du véhicule et la réception d'un signal de communication (105) indiquant un état d'un canal de communication ;
le fait de déterminer si l'occupant est en mesure de prendre la commande du véhicule en fonction du signal d'état d'occupant reçu ;
la détermination de l'état du canal de communication en fonction du signal de communication reçu ; et
la génération d'une sortie (118) indiquant si l'occupant est en mesure de prendre la commande du véhicule et l'état du canal de communication, dans lequel s'il est déterminé que l'occupant n'est pas en mesure de prendre la commande du véhicule et que le canal de communication n'est pas disponible, le procédé comprend :
l'émission d'au moins un signal de commande pour provoquer un fonctionnement autonome du véhicule,
la poursuite de la surveillance de la disponibilité du canal de communication pendant un fonctionnement autonome du véhicule ; et
en réponse au fait de déterminer que le canal de communication est devenu disponible par la suite, l'émission d'au moins un signal de commande pour amener le véhicule à être conduit de manière autonome jusqu'à un emplacement d'arrêt.

8. Logiciel informatique (119) qui, lorsqu'il est exécuté, est conçu pour réaliser le procédé selon la revendication 7.

9. Support de stockage non transitoire lisible par ordinateur (117) sur lequel sont stockées des instructions qui, lorsqu'elles sont exécutées par un ou plusieurs processeurs électroniques (116), amènent le ou les processeurs électroniques (116) à mettre en œuvre le procédé selon la revendication 7.
